Europäisches Patentamt

European Patent Office

Office européen des brevets

(11) Numéro de publication: **0 194 162**
**B1**

## FASCICULE DE BREVET EUROPEEN

(45) Date de publication du fascicule du brevet: **03.10.90**

(51) Int. Cl.⁵: **H 04 N 5/232,** G 03 B 3/10

(21) Numéro de dépôt: **86400007.0**

(22) Date de dépôt: **03.01.86**

(54) Procédé et dispositif de mise au point d'une caméra, et caméra comportant un tel dispositif.

(30) Priorité: **04.01.85 FR 8500108**

(43) Date de publication de la demande:
**10.09.86 Bulletin 86/37**

(45) Mention de la délivrance du brevet:
**03.10.90 Bulletin 90/40**

(84) Etats contractants désignés:
**DE GB IT NL SE**

(56) Documents cités:
**EP-A-0 031 483**
**US-A-4 422 097**

(73) Titulaire: **THOMSON-CSF**
**51, Esplanade du Général de Gaulle**
**F-92800 Puteaux (FR)**

(72) Inventeur: **Ferre, Alain**
**THOMSON-CSF SCPI 173, bld Haussmann**
**F-75379 Paris Cedex 08 (FR)**
Inventeur: **Delsarte, Pierre**
**THOMSON-CSF SCPI 173, bld Haussmann**
**F-75379 Paris Cedex 08 (FR)**

(74) Mandataire: **Courtellemont, Alain et al**
**THOMSON-CSF SCPI**
**F-92045 PARIS LA DEFENSE CEDEX 67 (FR)**

Courier Press, Leamington Spa, England.

# Description

La présente invention se rapporte à la mise au point automatique de caméras de télévision.

Il est connu, par exemple par le brevet US 4 422 097, de commander le moteur d'entraînement des lentilles de mise au point d'une caméra de télévision en fonction de la quantité de hautes fréquences contenues dans l'image, cette quantité étant calculée à l'aide d'un indicateur de netteté. Pour cela la position des lentilles est modifiée de façon lente et périodique, par des déplacements ayant généralement tous la même amplitude; l'image est délarée nette quand la valeur fournie par l'indicateur passe par un maximum. Lorsque l'image analysée présente une structure spatiale plus ou moins périodique comme, par exemple, des bandes parallèles, cette façon de procéder peut conduire à un réglage incorrect; en effet la courbe de la valeur de l'indicateur en fonction de la position des lentilles, fait apparaître un pic principal et un ou plusieurs pics secondaires or c'est sur un de ces pics secondaires dus à la structure périodique de l'image que risque de se faire le réglage. Comme l'amplitude en fonction de la position des lentilles, varie fortement avec les fréquences spatiales de l'image étudiée, il n'est pas possible de déterminer, grâce à un seuil, quel est le pic principal c'est-à-dire le pic sur lequel doit s'effectuer le réglage. Quant à l'exploration systématique de toute la courbe, suivie d'un retour à la position correspondant au pic d'amplitude maximale, elle est relativement longue et produit un effet de trainage important dans l'image.

La présente invention a pour but d'éviter ou pour le moins de réduire les inconvénients des dispositifs de mise au point basés sur une étude de la quantité de hautes fréquences contenus dans l'image de la caméra.

Ceci est obtenu à l'aide d'un indicateur de netteté permettant une étude selon au moins deux axes différents, de la structure spatiale de l'image et par une vérification de l'obtention du pic principal, basée sur une étude effectuée au moins selon deux des axes différents.

Selon l'invention un procédé de mise au point de l'objectif d'une caméra de télévision à partir de valeurs

$$N= \sum_{(i,j)\varepsilon F} g(i,j),$$

où F est une fenêtre d'analyse contenue dans l'image analysée, où (i,j) est un point de la fenêtre d'analyse situé à la ligne i et à la colonne j de l'image et où g(i,j) est un gradient de la valeur X(i,j) du signal vidéo de la trame de télévision délivrée par la caméra, ce procédé consistant à effectuer des déplacements unitaires systématiques des lentilles de l'objectif, à comparer, pour chaque position des lentilles, la valeur N avec la valeur N de la position précédente et à rechercher une valeur maximale de N, est caractérisé en ce qu'il consiste à choisir le gradient considéré parmi deux ou moins des quatre gradients X(i,j)−X(i,j−1), X(i,j)−X(i−1), X(i,j)−X(i−1, j−1), X(i,j)−X(i,j,j+1) et, lorsqu'une valeur de N maximale est trouvée, avec un premier des gradients autour d'une position donnée des lentilles, à vérifier que cette position donnée est celle de mise au point en recherchant autour de la position donnée, une autre valeur de N maximale, avec au moins un des gradients autre que le premier.

La présente invention sera mieux comprise et d'autres caractéristiques apparaîtront à l'aide de la description ci-après et des figures s'y rapportant qui représentent:

la figure 1 un schéma relatif à des points d'analyse d'une image fournie par une caméra de télévision,

la figure 2, un schéma montrant comment, selon l'invention, est effectuée la mise au point d'une caméra de télévision,

la figure 3, un organigramme du procédé de mise au point,

les figures 4 et 5, des schémas d'un dispositif pour la mise au point d'une caméra de télévision,

les figures 6 à 9 des dessins expliquant le fonctionnement d'un ensemble de mémoires de la figure 4.

Dans la suite de la description il va être question d'un indicateur de netteté qui sera aussi appelé indicateur; il s'agira d'un appareil de mesure destiné à recevoir tout ou partie du signal vidéo produit par une caméra de télévision et qui fournit un signal N de la forme

$$N= \sum_{(i,j)\varepsilon F} g(i,j)$$

où i,j sont les coordonnées d'un point de l'image situé à la ligne i et à la colonne j, où F est une fenêtre d'analyse prédéterminée contenue dans l'image fournie par la caméra et où g(i,j) est un gradient de la quantité de hautes fréquences, X, contenues dans le signal vidéo de la caméra.

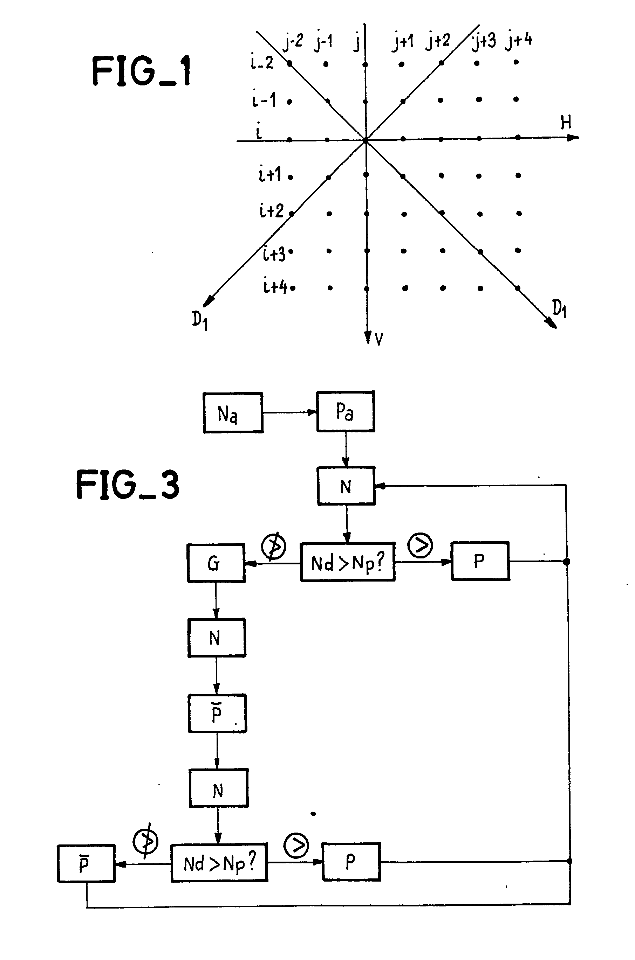

Dans l'art antérieur il était connu de déterminer ce gradient selon les horizontales de l'image, ce qui consistait, mais en analogique, à prendre un signal représentatif de X(i,j)−X(i,j−1). Comme il a été indiqué plus avant, la courbe de la valeur fournie par l'indicateur en fonction de la position des lentilles peut présenter des pics secondaires dus à une structure périodique de l'image, ce qui est très gênant pour la mise au point. Or des mesures faites par l'inventeur ont permis de montrer que la courbe de la valeur fournie par l'indicateur en fonction de la position des lentilles était différente selon la direction dans laquelle était déterminée la gradient; la figure 1, relative à une fenêtre de points d'analyse de l'image d'une caméra de télévision, permet de mieux saisir cette notion de gradients différents dans l'image de télévision.

La figure 1 montre des points d'une image analysée, répartis en sept lignes i−2 à i+4 et sept colonnes j−2 à j+4. En appelant X(i,j) la quantité de hautes fréquences relative au point i,j, la valeur N, fournie par l'indicateur de netteté, peut être déterminée en prenant pour le gradient g(i,j):

soit g(i,j)=gH=X(i,j)−X(i,j−1) gradient horizontal,
   selon la revendication H sur la figure 1,
soit g(i,j)=gV=X(i,j)−X(i−1,j) gradient vertical,
   selon la direction V sur la figure 1,
soit g(i,j)=gD1=X(i,j)−X(i−1, j−1) gradient de diagonale+45°, selon la direction D1 sur la figure 1,
soit g(i,j)=gD2=X(i,j)−X(i−1, j+1) gradient de diagonale −45°, selon la direction D2 sur la figure 1.

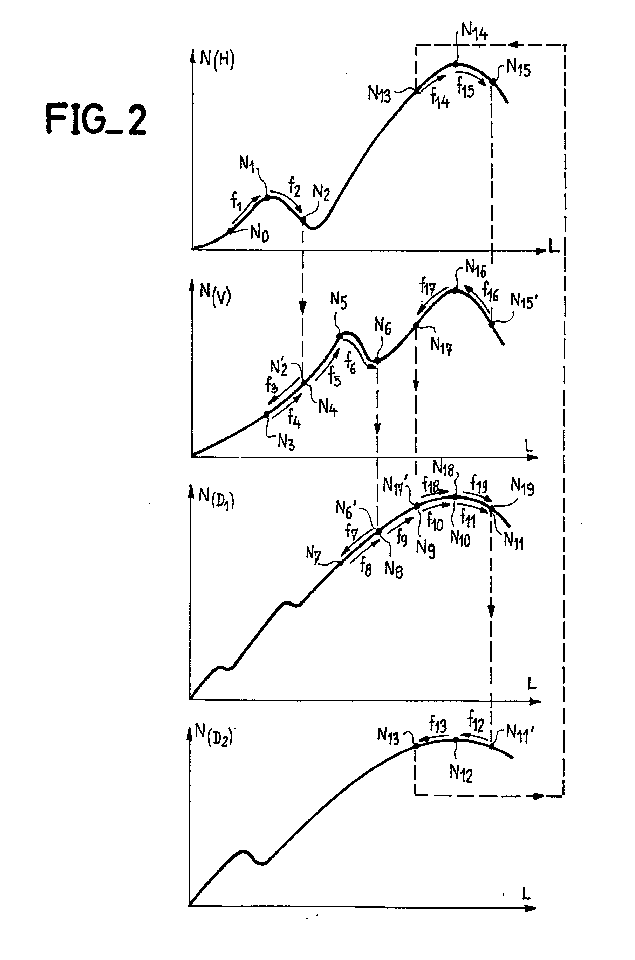

Les quatre courbes de la figure 2 sont relatives aux valeurs N de l'indicateur de netteté en fonction de la position, L, des lentilles, et ceci pour une image donnée et pour des gradients selon, respectivement, les quatre directions indiquées ci-avant. De ces courbes il résulte que, si la position des lentilles correspondant au pic principal est la même quelle que soit le gradient considéré, par contre les positions des lentilles correspondant aux pics secondaires, parasites varient en fonction du gradient considéré. L'expérience montre que la probabilité d'avoir une position des lentilles à laquelle correspondrait un pic secondaire pour chacun des quatre gradients mentionnés ci-avant est pratiquement nulle; cette particularité est mise à profit, dans l'invention, pour vérifier, quand un pic apparaît, s'il s'agit d'un pic principal qui se retrouve au même point de réglage des lentilles pour les quatre gradients ou s'il s'agit d'un pic secondaire qui ne corespond pas à une position de réglage correct des lentilles.

La figure 2 est relative aux différentes étapes d'un réglage, selon l'invention, des lentilles d'une caméra de télévision. La figure 2 montre, de haut en bas, les courbes correspondant au gradient dans le sens horizontal, H, dans le sens vertical, V, dans la diagonale D1 et dans la diagonale D2. Au départ de l'opération de réglage des lentilles, la position L des lentilles est quelconque, l'indicateur de netteté fonctionne avec un gradient de direction quelconque qui sera supposée être la direction horizontale. L'indicateur de netteté fournit une valeur N0, les lentilles sont déplacées, par exemple vers l'avant de la caméra, sur une faible distance; ce déplacement qui aura toujours la même amplitude et dont seul le sens pourra varier, sera appelé, dans ce qui suit, déplacement unitaire. Après ce premier déplacement unitaire, repéré par une flèche f1 sur la courbe de gradient H, l'indicateur de netteté fournit une valeur N1 supérieure à N0 ce qui indique que le déplacement unitaire semble s'être effectué dans le sens d'une amélioration de la mise au point. Le deuxième déplacement se fait donc dans le même sens (flèche f2) et l'indicateur continue d'utiliser le gradient H pour fournir une nouvelle valeur, N2, relative à la position atteinte. Cette valeur N2 étant inférieure à N1, les lentilles ne sont pas déplacées et l'indicateur est commandé pour fournir une valeur N2', mais cette fois avec un nouveau gradient qui, dans l'exemple décrit, est le gradient V (deuxième courbe de la figure 2); cette opération est destinée à vérifier si le pic qu'indique la valeur N2 inférieure à N1 est ou n'est pas le pic principal sur lequel doit se faire la mise au point. Un troisième déplacement (flèche f3) dans le sens inverse des deux précédents, conduit à une valeur N3 de l'indicateur, inférieure à la valeur N2', ce qui montre que le pic était un pic parasite. Le sens de déplacement est à nouveau inversé et un quatrième déplacement (flèche f4) conduit à une valeur N4 supérieure à N3. La valeur de N ayant augmenté, un cinquième déplacement (flèche f5) est effectué sans changer de sens et de gradient par rapport à l'étape précédente. La valeur N5 étant supérieure à la valeur N4, un sixième déplacement (flèche f6) est effectué, toujours sans changer de sens et de gradient. La valeur N6 étant inférieure à la valeur N5 il faut, comme dans le cas où N2 était inférieur à N1, vérifier si le pic recontré est un pic principal ou non; pour cela, comme dans le cas précédent, le gradient est changé pour l'indicateur (troisième courbe de la figure 2), une nouvelle valeur N6' est fournie par l'indicateur sans que les lentilles aient été déplacées, puis les lentilles sont déplacées dans le sens inverse du déplacement précédent (flèche f7), ce qui conduit à une valeur N7 à la sortie de l'indicateur. La valeur N7 étant inférieure à la valeur N6' le pic trouvé peut être considéré comme un pic parasite. Sans changer de gradient mais en changeant de sens de déplacement (déplacement vers l'avant de la caméra) des déplacements successifs sont effectués (flèches f8 à f11) jusqu'à ce que soit trouvée une valeur de N inférieure à la valeur précédente; c'est la valeur N11. A nouveau il faut vérifier si le pic trouvé est ou n'est pas le pic principal. Comme dans les cas précédents, le gradient de l'indicateur est changé (quatrième courbe de la figure 2), l'indicateur de netteté donne une valeur N11'; un déplacement, dans le sens inverse du déplacement précédent, est effectue (flèche f12) qui amène une valeur N12 à la sortie de l'indicateur; la valeur N12 étant supérieure à N11' il semble que le pic trouvé est bien le pic principal et que les lentilles sont correctement réglées. Néanmoins le processus de réglage est poursuivi comme dans tous les cas précédents où la nouvelle valeur donnée par l'indicateur était supérieure à la précédente; il y a deux raisons à cela: d'une part vérifier avec les autres gradients que les pics trouvés ne sont pas deux pics parasites qui auraient sensiblement la même abscisse respectivement sur la troisième et la quatrième courbe de la figure 2 et d'autre part être prêt à vérifier le réglage, si nécessaire, c'est-à-dire dans le cas où la modification de l'image conduirait à un déplacement de l'abscisse du pic principal sur les quatre courbes de la figure 2. Un déplacement (f13) non précédé d'un changement de sens est donc effectué, qui conduit à une valeur N13 inférieure à N12 d'où un changement de gradient qui ramène au gradient de direction horizontale (première courbe de la figure 2); en bref les opérations sont alors les suivantes: obtention N13', déplacement avec changement de sens, f14, obtention de N14 supérieur à N13', déplacement sans changement de sens f15, obtention de N15 inférieur à N14, changement de gradient (direction verticale), obtention de N15', déplacement avec changement de sens, f16, obtention de N16 supérieur à N15', déplacement sans changement de sens, f17, obtention de N17 inférieur à N16, changement de gradient (direction D1), obtention de N17', déplacement avec changement de sens, f18, obtention de N18 supérieur à N17', déplacement sans changement sens, f19, obtention de N19 inférieur à N18, etc.

Il est à remarquer que, dans le cas de la figure 2, différentes valeurs sont égales entre elles: N2'=N4, N6'=N8, N9=N17', N10=N18 et N11=N19; ceci est dû à ce qu'il est supposé, par exemple pour N2'=N4, que, entre le début du déplacement f3 et la fin du déplacement f4 la structure de l'image n'a pas varié et que les déplacements f3 e f4 sont exactement de même amplitude.

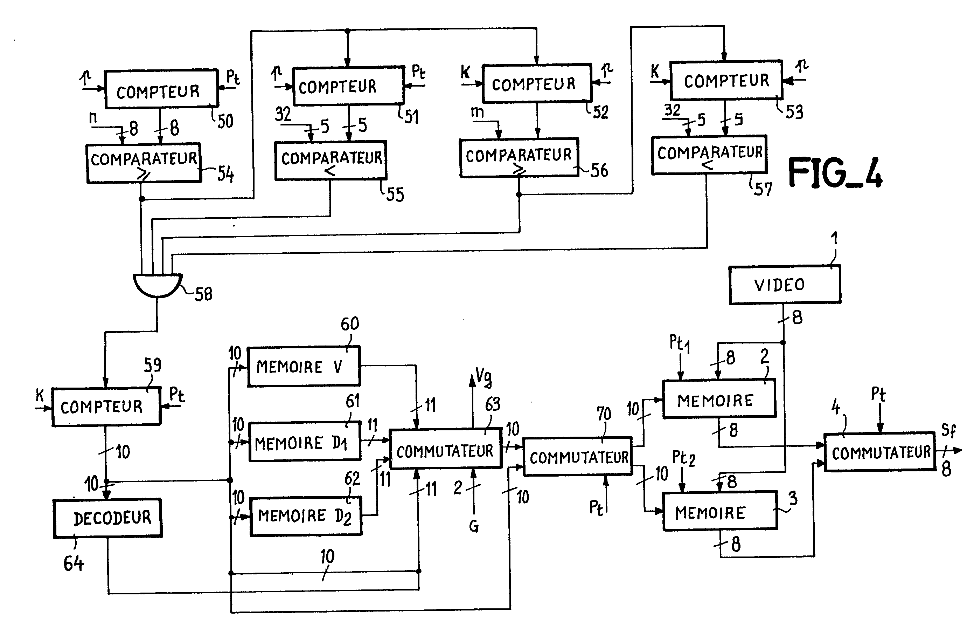

La figure 3 est un organigramme du procédé de mise au point dont un exemple d'utilisation vient d'être décrit à l'aide de la figure 2. Dans cet organigramme les signes utilisés représentent respectivement:

Na: la valeur fournie par l'indicateur de netteté au moment de la mise en route (position des lentilles et gradient arbitraires),

Pa: déplacement unitaire dans un sens arbitraire,

N: valeur fournie par l'indicateur à un moment donné,

Nd>Np?: la dernière valeur, Nd, fournie par l'indicateur est-elle supérieure à l'avant dernière, Np?—la réponse est figurée par un V couché dans un cercle pour le OUI et par un V couché dans un cercle barré pour le NON,

P: déplacement unitaire dans le même sens que le déplacement précédent,

P̄: déplacement unitaire dans le sens inverse de celui du déplacement précédent,

G: changement de gradient.

L'organigramme selon la figure 3 se compose d'une initialisation suivie de trois phases:

Initialisation
(position des lentilles et gradient arbitraires)
— calcul de l'indicateur de netteté,

phase 1
— si la dernière valeur fournie par l'indicateur est supérieure à l'avant-dernière.

alors
— déplacement unitaire des lentilles dans le même sens que le déplacement précédent,
— calcul de l'indicateur,
— retour au début de la phase 1,

sinon
— changement de gradient,
— calcul de l'indicateur,
— aller en phase 2,

phase 2
— déplacement unitaire des lentilles dans le sens inverse du déplacement précédent,
— calcul de l'indicateur,
— aller an phase 3,

phase 3
— si la dernière valeur fournie par l'indicateur est supérieure à l'avant-dernière.

alors
— déplacement unitaire des lentilles dans le même sens que le déplacement précédent,
— calcul de l'indicateur,
— aller en phase 1,

sinon
— déplacement unitaire des lentilles dans le sens inverse du déplacement précédent,
— calcul de l'indicateur,
— aller en phase 1.

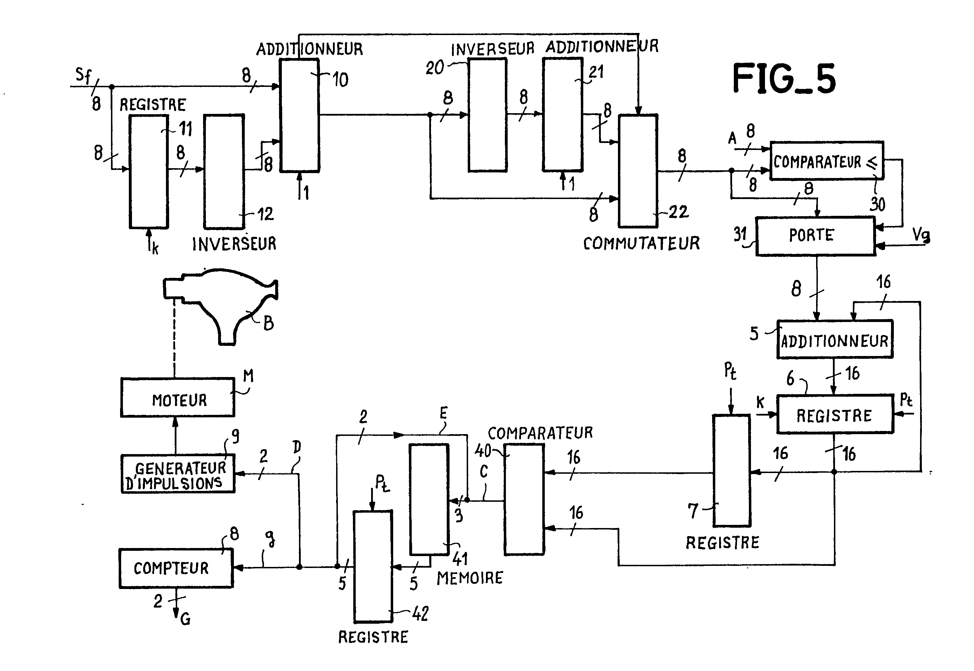

Les figures 4 et 5 sont des schémas représentant deux parties d'un dispositif selon l'invention pour la mise au point d'une caméra. Le dispositif qui a servi de modèle a été conçu pour une caméra fonctionnant en 625 lignes par image avec un signal vidéo codé en binaire sur huit bits et dont la fréquence d'échantillonnage est de 10,125 MHz; quant à la fenêtre dans laquelle l'indicateur de netteté calcule sa valeur, ses dimensions ont été choisies égales à 32 par 32 points, étant entendu que les points sont ceux de l'échantillonnage. Sur les figure 4 et 5 différents signaux sont indiqués par des repères: K est le signal d'échantillonnage, Pt le signal de synchronisation de trame prolongé sur toute la durée de la trame et formé de Pt1, signal de synchronisation de trame impaire prolongé, et Pt2, signal de synchronisation de trame paire prolongé, p le signal de synchronisation de ligne, n et m les signaux représentatifs respectivement du rang de la première ligne et de la première colonne de la fenêtre, Sf le signal de fenêtre d'analyse après mise en mémoire et lecture de la mémoire, G le signal de commande de changement de gradient pour le calcul de l'indicateur, A un signal prédéterminé et Vg un signal de validation de gradient.

La figure 4 montre un bloc 1, appelé VIDEO, qui symbolise les circuits d'obtention du signal vidéo d'une caméra de télévision et les circuits d'échantillonnage pour fournir un signal échantillonné, numérisé sur huit bits. Il est à noter que, sur les figures 4 et 5, les conducteurs multiples sont indiqués par un petit trait qui coupe le conducteur et à côté duquel un chiffre donne le nombre de conducteurs simples, en parallèle, qu'il comporte; c'est ainsi qu'il est indiqué que le conducteur de sortie du bloc VIDEO comporte huit conducteurs simples. Les signaux numérisés correspondant à la fenêtre de l'image dans laquelle est effectué le calcul de l'indicateur dont il a été question plus avant, sont stockés, pour les trames paires et les trames impaires, respectivement dans deux mémoires 2 et 3; les mémoires 2 et 3 sont commandées par les signaux Pt1 et Pt2 de manière à être l'une en phase de lecture et l'autre en phase d'écriture pendant une trame et l'inverse pendant la trame suivante.

La fenêtre d'analyse de l'indicateur est définie à l'aide des circuits 50 à 59 de la figure 4. Un compteur 50, qui reçoit comme signal de comptage le signal p de synchronisation ligne et comme signal de remise à zéro le signal Pt de synchronisation trame, est relié à l'une des entrées d'un comparateur 54 dont l'autre entrée reçoit le signal n représentatif du rang de la première ligne de la fenêtre; le comparateur 54 fournit à une porte ET 58 un signal de la $n^e$ à la dernière ligne de chaque trame. Un compteur 51, qui reçoit comme signal de comptage le signal p et comme signal de remise à zéro le signal Pt, est autorisé de compter par le signal du comparateur 54; un comparateur 55 reçoit sur une entrée le signal de sortie du compteur 51 et sur une autre entrée le signal correspondant au signal du compteur 51 quand le compte atteint est égal à 32; le comparateur 55 fournit à la porte ET 58 un signal de la première à la $(n+32)^e$ ligne de chaque trame. Un compteur 52, qui reçoit comme signal de comptage le signal K d'échantillonnage et comme signal de remise à zéro le signal p, n'est autorisé de compter que lorsque le signal de sortie du comparateur 54 est au niveau logique 1; un comparateur 56 reçoit sur une entrée le signal de sortie du compteur 52 et sur une autre entrée le signal m représentatif du rang de la première colonne de la fenêtre; à partir de la $n^e$ ligne de chaque trame le comparateur 56 fournit à la porte ET 58 un signal pour tous les points de la $m^e$ à la dernière colonne de la trame. Un compteur 53, qui reçoit comme signal de comptage le signal K et comme signal de remise à zéro le signal p, n'est autorisé de compter que lorsque le signal de sortie du comparateur 56 est au niveau 1 logique; un comparateur 57 reçoit sur une entrée le signal de sortie du compteur 53 et sur une autre entrée le signal correspondant au signal du compteur 53 quand le compte atteint est égal à 32; tant que le comparateur 56 fournit un signal de sortie le comparateur 57 fournit lui-même un signal de sortie pour tous les points jusqu'à la $(m+32)^e$ colonne de la trame.

La porte ET 58 de la figure 4 fournit donc, en fonction de ses signaux d'entrée, un signal qui est au niveau logique 1 pendant, et seulement pendant la fenêtre d'analyse de chaque trame; ce signal sert de signal d'autorisation pour un compteur 59 dont le signal de comptage est le signal K et dont le signal de remise à zéro est le signal Pt. Le compteur 59 fournit ainsi un signal de comptage qui progresse de 1 à $32^2$ pendant la durée de chaque fenêtre.

Pour permettre le changement de gradient dans le calcul de l'indicateur de netteté, celle des deux mémoires 2, 3 qui est lue pour fournir les éléments de calcul, c'est-à-dire les valeurs X(i,j) dont il a été question plus avant, est adressé soit directement par le compteur 59 pour le gradient horizontal, soit par l'intermédiaire d'une mémoire morte choisie parmi trois 60, 61, 62; le choix entre les mémoires et le signal provenant directement du compteur 59, s'effectue à l'aide d'un commutateur 63 commandé par un signal G de changement de gradient qui sera précisé à l'aide de la figure 5.

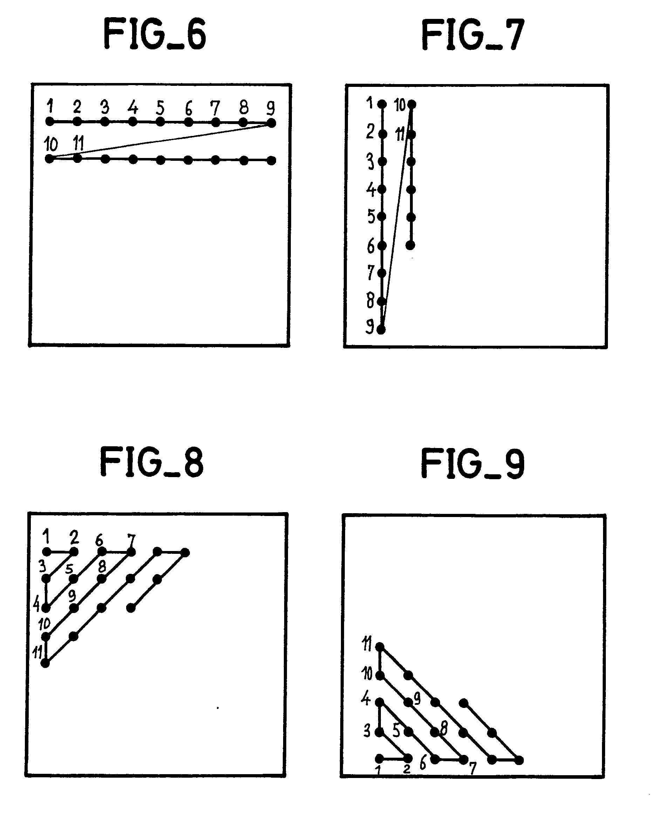

Les figures 6 à 9 montrent, réduit à une fenêtre de 9 par 9 points pour simplifier le dessin, dans quel ordre doivent être pris les points de la fenêtre selon le type de gradient qui est choisi pour le calcul par l'indicateur de netteté; sur ces figures n'ont été représentés que les premiers points utilisés pour le calcul, avec, à côté de chacun de ces points, un numéro d'ordre relatif à ce point. Sur la figure 6 l'ordre des points correspond à leur ordre d'élaboration par la caméra, il n'y a donc pas besoin de transposition à l'aide d'une mémoire; c'est le cas où le gradient choisi est le gradient horizontal. Par contre sur les figures 7, 8 et 9 les points sont pris respectivement par colonnes, en zigzag à partir du coin en haut à gauche de la fenêtre et en zigzag à partir du coin en bas à droite de la fenêtre; les chiffres indiqués dans ces trois fenêtres correspondent aux adresses de stockage dans les mémoires 60 à 62 qui servent respectivement pour le calcul selon le gradient vertical, V, selon la diagonale D1 (voir figure 1) et selon la diagonale D2. Un commutateur 70, commandé par le signal Pt, comporte deux entrées reliées respectivement à la sortie du commutateur 63 et à la sortie du compteur 59, pour délivrer, une trame sur deux, un signal d'écriture à la mémoire 2 et un signal de lecture à la mémoire 3 et l'inverse à la trame suivante. Le signal d'écriture est le signal de sortie du commutateur 63 et le signal de lecture est le signal de sortie du compteur 59, appliqué directement sur une entrée du commutateur 70.

Un commutateur 4, commandé par le signal Pt, reçoit et délivre, une trame sur deux, le signal de lecture de la mémoire 2 et, la trame suivante, le signal de lecture de la mémoire 3. Le signal Sf est utilisé, dans le circuit selon la figure 5, pour fournir le signal d'indication de netteté et permettre de régler la position des lentilles de l'objectif de la caméra de télévision.

Dans le montage selon la figure 5 le gradient utilisé pour le calcul de l'indicateur est obtenu par différence, en valeur absolue, entre deux valeurs consécutives fournies par celle des deux mémoires 2, 3, de la figure 4, qui est lue. La valeur absolue est obtenue par sélection de la valeur de la différence complémentée à 2 si cette valeur est négative ou de cette différence si cette valeur est positive. Pour cela le montage de la figure 6 comporte un additionneur 10 qui reçoit le signal Sf d'un point de la fenêtre, en même temps qu'il reçoit d'une part le signal Sf du point précédent inversé grâce à un registre tampon, 11, commandé par le signal d'échantillonnage et suivi d'un inverseur 12 et d'autre part un 1 logique. Le signal de sortie de l'additionneur 10 est appliqué directement à une première entrée de signal d'un commutateur 22 et est également appliqué à une deuxième entrée de signal de ce commutateur, à travers un inverseur 20 suivi d'un additionneur 21 qui reçoit également un 1 logique; la sélection par le commutateur 22 entre la valeur complémentée à 2 fournie par l'additionneur 21 et la différence fournie par l'additionneur 10, se fait par commande du commutateur 22 au moyen du signal de dépassement de la valeur 11111111 par l'additionneur 10.

Aux frontières de la fenêtre, deux adresses lues successivement ne correspondent pas à deux points consécutifs, les différences calculées sont erronées et doivent être éliminées; c'est ainsi que dans le cas du gradient horizontal représenté sur la figure 6, les différences telles que celle entre le point 9 et le point 10 doivent être éliminées, de même que dans le cas du gradient vertical (figure 7); dans le cas du gradient selon la diagonale D1 (figure 8) ce sont les différences entre des points tels que 1 et 2, 3 et 4, 5 et 7, 10 et 11, qui doivent être éliminées de même que dans le cas du gradient selon la diagonale D2 (figure 9).

Un bit d'adresse supplémentaire (validation d'accumulation) doit donc signaler la validité des calculs.

Il s'ensuit que le contenu des mémoires V, D1, D2, respectivement notées 60, 61, 62, est codé par 11 bits: 10 bits d'adresse et 1 bit de validation du gradient qui prend la valeur 0 lorsque la différence qui va être calculée doit être éliminée (par exemple pour le point 10 de la figure 7 et pour le point 7 de la figure 8).

La validation horizontale de gradient est obtenue à partir d'un décodage à l'aide d'un circuit décodeur 64 qui reçoit les signaux du compteur 59 et indique au commutateur 63 quand une différence qui va être calculée doit être éliminée (par exemple pour le point 10 de la figure 6).

Le bit de validation, Vg, issu du commutateur 63, valide le gradient au niveau d'une porte 31 (figure 5).

Pour éviter le bruit, la transmission du signal de sortie du comparateur 22 n'est autorisée par un circuit à seuil que si le signal est supérieur à un seuil prédéterminé. Le circuit à seuil comporte la porte 31, qui reçoit, outre le signal de validation Vg, le signal de sortie du commutateur 22 et qui ne le laisse passer que si Vg=1 et si une valeur prédéterminée, A, appliquée à la première entrée d'un comparateur 30 est inférieure ou égale à la valeur du signal de sortie du commutateur 22.

A la sortie du circuit à seuil les signaux sont additionnés dans un addtionneur 5 et stockés dans un registre 6, à la fréquence d'échantillonnage K. La valeur obtenue en fin de trame est délivrée d'une part directement à une entrée d'un comparateur 40 et d'autre part, à travers un registre tampon 7 dont l'entrée de commande de lecture reçoit le signal Pt, à une autre entrée du comparateur 40. Le comparateur 40 reçoit ainsi directement des registres 6 et 7 ce qui avait été appelé respectivement dernière et avant-dernière valeur fournies par l'indicateur, dans l'organigramme selon la figure 3.

Une mémoire morte, 41, de 3 par 5, reçoit le signal de sortie du comparateur 40 et est reliée par sa sortie à l'entrée d'un registre tampon 42 dont l'entrée de commande de lecture reçoit le signal Pt. Deux des conducteurs de sortie du registre 42 vont à l'entrée de la mémoire 41, tandis qu'un conducteur va à l'entrée d'un compteur 8 qui fournit le signal G de changement de gradient et que deux conducteurs vont à l'entrée d'un générateur d'impulsions, 9, qui fournit des impulsions de marche avant et de marche arrière à un moteur pas à pas, M, qui entraîne les lentilles de réglage de l'objectif de la caméra, B.

Les paramètres d'entrée de la mémoire 41 sont les suivants:

—résultat, C, de la comparaison, par le comparateur 40, entre la dernière et l'avant-dernière valeur fournie par l'indicateur

    C=0 pour dernière valeur inférieure à avant-dernière valeur.

    C=1 pour dernière valeur supérieure à avant-dernière valeur.

—description de l'état antérieur E

    E=00 pour la phase 1

    E=01 pour la phase 2

    E=10 pour la phase 3

Les paramètres de sortie de la mémoire 41, délivrés à travers le registre 42 sont les suivants:

— description de l'état actuel E

    E=00 pour la phase 1

    E=01 pour la phase 2

    E=10 pour la phase 3

— sens, D, de déplacement des lentilles

    D=00 pas de déplacement

    D=01 déplacement, P, des lentilles, sans changement de sens par rapport au déplacement précédent

    D=10 déplacement, P, des lentilles avec changement de sens par rapport au déplacement précédent

— commutation éventuelle, g, du type de gradient

    g=0 pas de commutation

    g=1 commutation.

En fonction de la description du procédé de mise au point qui a été décrit à l'aide des figures 2 et 3, le contenu de la mémoire 41 qui assure le déroulement de ce procédé est donné par la correspondance ci-après entre les entrées en mémoire et les sorties de la mémoire:

    E=00, C=0 donne D=00, g=1, E=01
    E=00, C=1 donne D=01, g=0, E=00
    E=01, C=0 donne D=10, g=0, E=10
    E=01, C=1 donne D=10, g=0, E=10
    E=10, C=1 donne D=01, g=0, E=00
    E=10, C=0 donne D=10, g=0, E=00

ce qui se lit de façon plus détaillée, par exemple pour la première de ces six lignes: "si l'étape précédente s'est arrêtée au début d'une phase 1 (E=00) et que la dernière valeur est inférieure à l'avant-dernière valeur fournie par l'indicateur (C=0), alors il ne faut pas déplacer les lentilles (D=00), mais il faut changer de gradient (g=1) et aller en début de phase 2 (E=01)".

Le générateur d'impulsions 9 comporte, pour réagir aux signaux D de déplacement, deux circuits à impulsions pour fournir respectivement une impulsion positive et une impulsion négative chaque fois qu'apparaît un signal D de valeur non nulle (D=01 et D=10) et un compteur modulo 2 qui avance d'une unité à chaque apparition d'un signal D=10. Les impulsions des deux circuits à impulsions sont retardées et, pour faire avancer le moteur M, c'est l'impulsion positive retardée qui est utilisée si le compteur est à 1 et c'est l'impulsion négative retardée qui est utilisée si le compteur est à zéro.

L'invention n'est pas limité à l'exemple décrit, c'est ainsi, en particulier, que dans la phase 1 de l'organigramme selon la figure 3 il peut être prévu, après le changement de gradient (bloc G) et avant le calcul de l'indicateur (bloc N), un déplacement unitaire des lentilles dans le sens inverse du déplacement précédent.

De même le moteur pas à pas, M, utilisé pour déplacer les lentilles peut être remplacé par tout autre moteur d'asservissement classique convenablement choisi et commandé; par exemple un moteur à courant continu, sur l'arbre duquel serait monté un disque codeur pour repérer sa position angulaire, peut être utilisé.

Quant au calcul de la valeur de l'indicateur de netteté, elle peut se faire par tout montage capable de donner un signal représentatif de la netteté d'au moins une partie de l'image. Il est à noter à ce sujet que la fenêtre d'analyse de l'indicateur de netteté peut couvrir toute l'image de télévision fournie par la caméra; dans ce cas les circuits 50 à 58 de la figure 4 sont inutiles et le compteur 59 compte pendant toute la durée d'une trame; le problème est qu'alors la taille des mémoires 2, 3 et 60, 61, 62 devient très importante.

Il est également possible de simplifier le montage en réduisant, au maximum à deux, le nombre de gradients différents selon lesquels peut s'effectuer le calcul de l'indicateur; par exemple en ne gardant que le gradient horizointal et le gradient vertical.

## Revendications

1. Procédé de mise au point de l'objectif d'une caméra de télévision à partir de valeurs

$$N = \sum_{(i,j)\varepsilon F} g(i,j),$$

où F est une fenêtre d'analyse contenue dans l'image analysée, où (i,j) est un point de la fenêtre d'analyse situé à la ligne i et à la colonne j de l'image et où g(i,j) est un gradient de la valeur X(i,j) du signal vidéo de la trame de télévision délivrée par la caméra, ce procédé consistant à effectuer des déplacements unitaires systèmatiques des lentilles de l'objectif, à comparer, pour chaque position des lentilles, la valeur N avec la valeur N de la position précédente et à rechercher une valeur maximalke de N, caractérisé en ce qu'il consiste à choisir le gradient considéré parmi deux au moins des quatre gradients X(i,j)−X(i,j−1), X(i,j)−X(i−1,j), X(i,j)−X(i−1, j−1), X(i,j)−X(i−1, j+1) et, lorsqu'une valeur de N maximale est trouvée, avec un premier des gradients, autour d'une position donnée des lentilles, à vérifier que cette position donnée est celle de mise au point en recherchant, autour de la position donnée, une autre valeur de N maximale, avec au moins un des gradients autre que le premier.

2. Procédé selon la revendication 1, caractérisé en ce qu'il comporte les étapes suivantes:

initialisation avec position des lentilles et gradient arbitraires, calcul de N, déplacement unitaire des lentilles dans un sens arbitraire, calcul de N, passage en phase 1

phase 1 avec, si le dernier N est supérieur à l'avant-dernier N, déplacement unitaire des lentilles dans le même sens que le déplacement précédent, calcul de N, retour au début de la phase 1, sinon passage en phase 2,

phase 2 avec déplacement unitaire des lentilles dans le sens inverse du déplacement précédent, calcul de N, passage en phase 3,

phase 3 avec, si le dernier N est supérieur à l'avant-dernier N, déplacement unitaire des lentilles dans le même sens que le déplacement précédent, calcul de N, passage en phase 1, sinon déplacement unitaire des lentilles dans le sens contraire du déplacement précédent, calcul de N, passage en phase 1.

3. Dispositif pour la mise au point d'une caméra de télévision selon le procédé décrit dans l'une quelconque des revendications précédentes, comportant en série un accès couplé au circuit vidéo (1) de la caméra, des moyens de soustraction (10, 11, 12) recevant des signaux (Sf) correspondant à une fenêtre d'analyse pour calculer un gradient g(i,j) de la valeur X(i,j) du signal vidéo, des moyens de calcul d'une valeur absolue (20, 21, 22) des résultats du calcul effectué par les moyens de soustraction, des moyens de sommation (5, 6) pour effectuer des sommations (N) de valeurs absolues données par les moyens de calcul, au rythme des trames de la caméra, des moyens de décision (7, 8, 9, 40, 41, 42) pour analyser les signaux successifs fournis par les moyens de sommation, caractérisé en ce qu'il comporte un ensemble de mise en mémoire (60—63, 70, 2, 3) pour la mise en mémoire d'au moins une partie des signaux fournis par l'accès pendant une trame et pour la lecture, selon au moins deux ordres différents, des signaux mis en mémoire et en ce que les moyens de décision comportent des moyens de commande (8) pour modifier l'ordre de lecture en mémoire en fonction des valeurs comparées des sommations relatives à une trame et à la trame suivante.

4. Caméra caractérisée en ce qu'elle est équipée d'un dispositif selon la revendication 3.

## Patentansprüche

1. Verfahren zum Einstellen des Objektivs einer Fernsehkamera, ausgehend von Werten

$$N= \sum_{(i,j)\varepsilon F} g(i,j),$$

wobei F ein im analysierten Bild enthaltenes Fenster, (i,j) ein auf einer Zeile i und einer Spalte j des Bildes gelegener Bildpunkt im Analysefenster und g(i,j) ein Gradient des Wertes X(i,j) des von der Kamera gelieferten Videosignals des Fernsehhalbbildes ist, und wobei dieses Verfahren darin besteht, systematische Einheitsverschiebungen der Linsen des Objektivs durchzuführen, für jede Stellung der Linsen den Wert N mit dem Wert N der vorhergehenden Stellung zu vergleichen und einen Maximalwert von N zu suchen, dadurch gekennzeichnet, daß das Verfahren darin besteht, den betrachteten Gradienten unter mindestens zweien von vier Gradienten X(i,j)−X(i,j−1), X(i,j)−X(i−1,j), X(i,j)−X(i−1,j−1), X(i,j)−X(i−1,j+1) auszuwählen, und, wenn ein Maximalwert von N mit einem ersten der Gradienten um eine gegebene Stellung der Linsen herum gefunden worden ist, zu überprüfen, ob diese gegebene Stellung diejenige der Scharfeinstellung ist, und zwar durch Suchen eines weiteren Maximalwerts von N mit mindestens einem anderen Gradienten im Bereich um die gegebene Stellung.

2. Verfahren nach Anspruch 1, dadurch gekennzeichnet, daß es folgende Schritte aufweist:

Initialisierung bei willkürlicher Stellung der Linsen und willkürlichem Gradienten, Berechnung von N, Einheitsverschiebung der Linsen in einem willkürlichen Sinn, Berechnung von N, Übergang nach Phase 1,

Phase 1: Falls der letzte Wert von N größer als der vorletzte Wert N ist, erfolgt eine Einheitsverschiebung der Linsen im gleichen Sinn wie bei der vorhergehenden Verschiebung, eine Berechnung von N und eine Rückkehr an den Anfang der Phase 1; ansonsten erfolgt ein Übergang nach Phase 2,

Phase 2: Einheitsverschiebung der Linsen im umgekehrten Sinn zur vorhergehenden Verschiebung, Berechnung von N, Übergang nach Phase 3,

Phase 3: Falls der letzte Wert von N größer als der vorletzte Wert N ist, erfolgt eine Einheitsverschiebung der Linsen im gleichen Sinn wie bei der vorhergehenden Verschiebung, eine Berechnung von N und ein Übergang nach Phase 1; ansonsten erfolgt eine Einheitsverschiebung der Linsen im entgegengesetzten Sinn zur vorhergehenden Verschiebung, eine Berechnung von N und ein Übergang nach Phase 1.

3. Einrichtung zum Einstellen einer Fernsehkamera nach dem in einem beliebigen der vorhergehenden Ansprüche beschriebenen Verfahren, mit einer Reihenschaltung aus einem an den Videokreis (1) der Kamera gekoppelten Anschluß, aus Subtrahiermitteln (10, 11, 12), welche einem zu analysierenden Fenster entsprechende Signale (SF) zur Berechnung eines Gradienten g(i,j) des Werts X(i,j) des Videosignals empfangen, aus Mitteln zur Berechnung eines Absolutwerts (20, 21, 22) der Resultate der mit den Subtrahiermitteln durchgeführten Berechnung, aus Summiermitteln (5, 6) zur Bildung der Summen (N) der durch die Berechnungsmittel im Halbbildtakt der Kamera gelieferten Absolutwerte, aus Entscheidungsmitteln (7, 8, 9, 40, 41, 42) zur Analyse der von den Summiermitteln gelieferten aufeinanderfolgenden Signale, dadurch gekennzeichnet, daß die Einrichtung eine Speichergruppe (60—63, 70, 2, 3) zum Abspeichern mindestens eines Teils der während eines Halbbilds vom Anschluß gelieferten Signale und zum Auslesen der gespeicherten Signale gemäß mindestens zwei unterschiedlichen Reihenfolgen aufweist, und daß die Entscheidungsmittel Steuermittel (8) zur Änderung der Reihenfolge des Auslesens aus dem Speicher in Abhängigkeit von den Vergleichswerten der ein Halbbild und das nachfolgende Halbbild betreffenden Summen.

4. Kamera, dadurch gekennzeichnet, daß sie mit einer Einrichtung nach Anspruch 3 ausgerüstet ist.

**Claims**

1. A method for adjusting the objective of a television camera in using the values of

$$N= \sum_{(i,j)\varepsilon F} g(i,j),$$

where F is an analysis window contained in the analyzed picture, where (i,j) is a point of the analysis window situated on the line i and on the column j of the picture, and where g(i,j) is a gradient of the value X(i,j) of the television field video signal delivered by the camera, said method consisting in effectuating systematic unitary displacements of the lenses of the objective, in comparing for each position of these lenses the value N with the value N of the preceding position, and in searching for a maximum value of N, characterized in that the method consists in selecting the considered gradient among at least two of the four gradients X(i,j)−X(i,j−1), X(i,j)−X(i−1,j), X(i,j)−X(i−1, j−1), X(i,j)−X(i−1, j+1) and, when a maximum value of N has been found, with a first one of the gradients around a given position of the lenses, in examining whether or not said given position is the final one, by searching around the given position an other maximum value of N with at least one of the other gradients than the first gradient.

2. A method according to claim 1, characterized in that it comprises the following steps:

initialisation with the positions of the lenses and gradient being arbitrary, computation of N, unitary displacement of the lenses in an arbitrary direction, computation of N, passage to phase 1,

phase 1: if the last value of N is greater than the last but one value of N, unitary displacement of the lenses in the same direction as the preceding displacement, computation of N, return to the start of step 1; otherwise passage to phase 2,

phase 2: the unitary displacement of the lenses in the direction inverse to the preceding displacement, computation of N, passage to phase 3,

phase 3: if the last value of N is greater than the last but one value of N, unitary displacement of the lenses in the same direction as the preceding displacement, computation of N, passage to phase 1; otherwise unitary displacement of the lenses in a direction contrary to the preceding displacement, computation of N, passage to phase 1.

3. A device for adjusting a television camera according to the method described in anyone of the preceding claims, comprising, in series, an access coupled to the video circuit (1) of the camera, subtracting means (10, 11, 12) adapted to receive signals (Sf) corresponding to an analysis window for the calculation of a gradient g(i,j) of the value X(i,j) of the video signal, means for computing an absolute value (20, 21, 22) of the results of the computation performed by the subtracting means, summing means (5, 6) for summing up (N) absolute values provided by the computing means at the frame frequency of the camera, decision means (7, 8, 9, 40, 41, 42) for analyzing the successive signals delivered by the summing means, characterized in that the device comprises a storage assembly (60—63, 70, 2, 3) for storing at least part of the signals delivered by the access during a frame period, and for reading out the stored signals according to at least two different orders, and in that the decision means comprise control means (8) for modifying the read-out order according to the compared values of the sums relative to a picture frame and to the following frame.

4. A camera, characterized in that it is provided with a device according to claim 3.

# FIG_1

# FIG_3

1

FIG_2

FIG_4

FIG_5

# FIG_6

# FIG_7

# FIG_8

# FIG_9